Europäisches Patentamt

European Patent Office

Office européen des brevets

(11) Numéro de publication: **0 263 033 B1**

# (12) FASCICULE DE BREVET EUROPEEN

(45) Date de publication de fascicule du brevet:
22.05.91

(51) Int. Cl.⁵: **C04B 35/00**, C04B 35/48, C04B 35/80

(21) Numéro de dépôt: 87402187.6

(22) Date de dépôt: 01.10.87

(54) **Procédé de fabrication de pièces composites comportant une matrice de matière céramique renforcée par des particules de zircone et éventuellement des fibres monocristallines de carbure de silicium, et pièces obtenues par ce procédé.**

(30) Priorité: 02.10.86 FR 8613755

(43) Date de publication de la demande:
06.04.88 Bulletin 88/14

(45) Mention de la délivrance du brevet:
22.05.91 Bulletin 91/21

(84) Etats contractants désignés:
AT BE CH DE ES GB IT LI LU NL SE

(56) Documents cités:
EP-A- 0 184 837      EP-A- 0 202 504
EP-A- 0 208 910      WO-A-86/05480
DE-A- 3 616 572      US-A- 4 366 254
US-A- 4 507 224      US-A- 4 657 877

(73) Titulaire: CERAMIQUES TECHNIQUES DES-
MARQUEST, S.A.
Tour Manhattan Place de l'Iris 6
F-92087 Paris La Défense(FR)

(72) Inventeur: Cales, Bernard
57 rue d'Angiviller
F-78120 Rambouillet(FR)
Inventeur: Torre, Jean-Paul
36 allée de la Prédecelle
F-78720 Cernay-la-Ville(FR)

(74) Mandataire: Mongrédien, André et al
c/o BREVATOME 25, rue de Ponthieu
F-75008 Paris(FR)

13th AUTOMOTIVE MATERIALS CONFEREN-
CE, Proceedings of the 13th Automotive Materials Conference, Sponsored by the Dept.
of Materials and Metallurgical Engineering,
6-7 November 1985, Michigan, The American
Ceramic Soc. Inc. Columbus, Ohio US; K.
Wilfinger et al.: "Processing of
transformation-toughened alumina" &
CER.ENG.SCI.ABSTR, 1986, vol. 7, no. 9-10,
pages 1169-1181

CHEMICAL ABSTRACTS, vol. 104, no 22, 2
June 1986, page 321, Abstract no. 191524x,
Columbus, Ohio, US; P. Homerin et al.:
"Mechanical properties of zirconia toughened alumina prepared by different methods", & J.PHYS:COLLOQ. 1986, (C1),
C1-717-C1-721

## Description

La présente invention concerne la préparation de matériaux composites à matrice céramique renforcée par des particules de zircone auxquelles on ajoute éventuellement des fibres monocristallines de carbure de silicium. De tels matériaux peuvent être utilisés par exemple dans des blindages et des outils de coupe.

Depuis quelques années, on a développé de nouveaux matériaux composites à matrice céramique renforcée par des fibres monocristallines ou whiskers de carbure de silicium afin d'améliorer les propriétés mécaniques de la céramique, en particulier sa ténacité.

Ainsi, le brevet américain US-A-4 543 345 décrit des matériaux composites de ce type qui sont préparés à partir d'un mélange homogène d'une poudre de la matière céramique et de fibres monocristallines de carbure de silicium en soumettant le mélange à une compression à chaud, à une température très élevée, largement supérieure à 1650°C, pour obtenir un matériau composite ayant une densité supérieure à environ 99% de la densité théorique du matériau céramique. Le mélange des fibres et de la poudre céramique est effectué en milieu liquide en utilisant des appareillages classiques. Après cette opération, on sèche le mélange par évaporation sous air en poursuivant l'agitation avant de le soumettre à la compression.

Ce procédé permet d'obtenir des résultats satisfaisants. Cependant avec ces opérations de mélange et de séchage, il est difficile d'obtenir une bonne répartition des fibres monocristallines dans la poudre de matière céramique. Or, dans des matériaux composites de ce type, les propriétés mécaniques obtenues dépendent en particulier de cette répartition des fibres monocristallines. De plus, le procédé décrit comporte une étape de densification à une température très élevée, ce qui constitue un handicap économique et ne permet pas un contrôle rigoureux de la microstructure et donc des propriétés des produits finis.

On connaît également des matériaux composites à matrice céramique renforcée par des particules de zircone obtenues par exemple à partir d'une suspension aqueuse de poudres de zircone et d'alumine, comme il est décrit dans
13th AUTOMOBILE MATERIALS CONFERENCE, Proceedings of the 13th Automotive Materials Conference, Sponsored by the Dept. of Materials and Metallurgical Engineering, 6-7 november 1985, Michigan, The American Ceramic Soc. Inc. Columbus, Ohio, US ;
K. WILFINGER et al. : "Processing of transformation toughened alumina" & CER. ENG. SCI. ABSTR. 1986, vol. 7, n° 9-10, pages 1169-1181.

Dans cette technique, il est également difficile d'obtenir une bonne répartition des particules de zircone dans la poudre de matière céramique.

La présente invention a précisément pour objet un procédé de fabrication de matériaux composites du même type comportant des particules de zircone et éventuellement des fibres monocristallines de SiC, qui permet d'obtenir une meilleure répartition des fibres et des particules de renforcement dans la matrice céramique et d'obtenir de ce fait de meilleures propriétés mécaniques, et cela à l'issue d'une étape de densification à une température n'excédant pas 1650°C. En effet, grâce à la meilleure répartition des fibres et des poudres, les contacts entre les grains de poudre sont plus nombreux et le frittage est ainsi plus facile à réaliser.

Le procédé, selon l'invention, de fabrication d'un matériau composite comportant une matrice de matière céramique renforcée par des particules de zircone éventuellement dopée, se caractérise en ce qu'il comprend les étapes successives suivantes :

1°) préparation d'une suspension homogène d'un mélange d'une poudre de la matière céramique d'une poudre de zircone éventuellement dopée contenant au moins 0,8% en poids de Cl dans un milieu aqueux contenant au moins un agent défloculant anionique consistant à mélanger les poudres de matière céramique et de zircone dans le milieu aqueux contenant l'agent défloculant à un pH d'au moins 8 et à les soumettre à un broyage,

2°) coulage de la suspension dans un moule poreux,

3°) démoulage de la pièce crue ainsi obtenue,

4°) séchage de la pièce crue, et

5°) frittage de la pièce séchée.

Dans le cas où l'on désire renforcer la matière céramique, non seulement par des particules de zircone éventuellement dopée, mais aussi par des fibres monocristallines de carbure de silicium, le procédé de fabrication du matériau composite comprend les mêmes étapes, mais dans la première étape on prépare une suspension homogène d'un mélange d'une poudre de la matière céramique, d'une poudre de zircone et de fibres monocristallines de carbure de silicium. Pour préparer cette suspension homogène, on mélange tout d'abord la poudre de matière céramique et la poudre de zircone dans un milieu aqueux à un pH d'au moins 8 par broyage et on forme ensuite une suspension homogène à partir des poudres ainsi broyées et de fibres monocristallines de carbure de silicium.

L'utilisation dans le procédé de l'invention de particules de zircone éventuellement dopée contenant au moins 0,8% en poids de chlore, est adapté au mode de préparation des pièces par coulage en moule poreux. En effet, ces particules de zircone qui jouent le rôle de renforcement, permettent de plus, d'obtenir une bonne dispersion des poudres lors de l'opération de coulée de la suspension dans le moule poreux car elles agissent comme défloculant vis-à-vis des particules de matière céramique. Ceci permet d'obtenir une meilleure répartition des particules et éventuellement des fibres de renforcement, d'améliorer la densité de la pièce crue et d'obtenir de ce fait de meilleures propriétés mécaniques.

Les particules de zircone contenant des traces de chlore utilisées dans le procédé de l'invention peuvent être préparées à partir de tétrachlorure de zirconium, ce qui conduit à des poudres contenant de l'acide chlorhydrique résiduel qui est intéressant dans le procédé de l'invention. En effet, en suspension dans l'eau, cette poudre est susceptible de dégager une grande quantité de protons qui vont faciliter sa défloculation. De plus, les protons excédentaires peuvent s'adsorber à la surface des grains de matière céramique en suspension et permettent également une parfaite défloculation de la poudre de matière céramique. Ainsi, cette poudre de zircone va assurer une meilleure dispersion de la poudre de matière céramique et permettre ainsi l'obtention de meilleures propriétés mécaniques. En effet, en utilisant une suspension ayant une meilleure homogénéité, on obtient une pièce qui présente également une meilleure homogénéité. Ceci conduit à un module de Weibull élevé sur des pièces de dimensions représentatives des pièces industrielles.

Cependant, pour obtenir cet effet des protons sur la poudre de matière céramique, il est nécessaire de réaliser simultanément le broyage des deux poudres dans un milieu aqueux car cet effet de surface ne pourrait être obtenu avec de l'acide chlorhydrique libéré en solution.

De préférence, la poudre de zircone est une poudre d'oxyde de zirconium dopée par un oxyde stabilisant tel que les oxydes de métaux divalents comme CaO ou MgO, et les oxydes de métaux trivalents tels que l'oxyde d'yttrium $Y_2O_3$ et les oxydes de Terres rares ; la proportion de cet oxyde peut aller jusqu'à 3% en moles par rapport à l'oxyde de zirconium, dans le cas de l'oxyde d'yttrium. La surface spécifique de la poudre de zircone est de préférence située dans la gamme allant de 6 à 50 $m^2/g$. En effet, pour que la zircone puisse jouer son rôle de renforcement qui est basé sur la transformation de phase de la zircone de l'état quadratique métastable à l'état monoclinique, il est nécessaire que les particules de zircone ne dépassent pas une taille critique au-delà de laquelle elles ne peuvent subsister dans la matrice sous forme quadratrique. Cette taille critique dépend en particulier de la teneur en oxyde dopant et elle augmente avec celle-ci.

Les matières céramiques susceptibles d'être utilisées dans le procédé de l'invention peuvent être choisies parmi l'alumine, la mullite ($3Al_2O_3$, $2SiO_2$), la cordiérite ($2MgO$, $2Al_2O_3$, $5SiO_3$), le nitrure d'aluminium, le nitrure de silicium $Si_3N_4$ et les sialons qui sont des solutions solides d'aluminium et d'oxygène dans $Si_3N_4$.

Les matières céramiques utilisées dans le procédé de l'invention sont sous la forme de poudre présentant une grande aptitude au frittage et une granulométrie généralement inférieure au micromètre.

De préférence, on utilise de l'alumine de grande pureté.

Dans le procédé de l'invention, l'étape de préparation de la suspension homogène du mélange de la poudre de matière céramique, de la poudre de zircone, et éventuellement des fibres monocristallines de carbure de silicium constitue une étape très importante puisqu'elle exerce une influence sur les propriétés mécaniques de la pièce obtenue ensuite partir de cette suspension. Pour cette préparation, on utilise comme milieu liquide de la suspension de l'eau à laquelle on ajoute une base telle que la soude pour ajuster le pH à une valeur d'au moins 8, généralement de 8 à 10. On ajoute également au moins un agent défloculant qui favorise la défloculation de la matière céramique et permet d'obtenir une bonne dispersion des poudres. L'agent défloculant est un agent défloculant anionique choisi de préférence parmi l'hexamétaphosphate de sodium, les polyacrylates d'ammonium et les polynaphtalènes sulfonates de sodium car ces agents défloculants permettent de faciliter également la dispersion des particules de zircone et des fibres monocristallines de carbure de silicium dans un milieu aqueux. Il est important également d'ajuster les concentrations en eau et en défloculant pour obtenir une suspension ou barbotine ayant une viscosité d'environ 1 poise au plus, de préférence une viscosité très inférieure à 1 poise.

Généralement, la teneur en eau de la suspension est de 25 à 35% en poids par rapport à la masse sèche constituée par les poudres de matière céramique et de zircone et éventuellement les fibres monocristallines de carbure de silicium. La teneur en agent défloculant est généralement de 0,5 à 2% en poids, par rapport à cette même masse sèche. On choisit également la teneur en eau et en défloculant en fonction de la composition de la masse sèche, c'est-à-dire de la proportion de particules de zircone et éventuellement de fibres monocristallines de carbure de silicium par rapport à la matière céramique.

Généralement, la quantité de particules de zircone présente dans cette masse sèche représente de 10 à 30% en poids de cette masse sèche ; lorsque la suspension contient des fibres monocristallines de carbure de silicium la quantité de fibres se situe de préférence dans la gamme allant de 5 à 30% en poids par rapport à la masse sèche.

Les fibres de carbure de silicium utilisées sont des fibres monocristallines contenant des phases de carbure de silicium bêta et des phases mélangées de carbure de silicium alpha et bêta. Leur diamètre moyen est d'environ 0,6 micromètre et leur longueur de 10 à 80 micromètres. Ces fibres monocristallines présentent d'excellentes caractéristiques mécaniques, par exemple un module d'Young pouvant atteindre 700 GPa et une résistance à la traction de 7 GPa en valeur moyenne. Ces fibres se présentent sous la forme d'agglomérats fortement enchevêtrés qui doivent être parfaitement dispersés dans la suspension.

Pour obtenir une suspension homogène des différents constituants avec une bonne homogénéisation du mélange des poudres de matière céramique et de zircone et éventuellement des fibres monocristallines de SiC, il est important de réaliser le mélange des constituants dans des conditions particulières.

Ainsi, dans le cas où la suspension contient uniquement des poudres de matière céramique et de zircone, on prépare la suspension en mélangeant les deux poudres de matière céramique et de zircone directement dans le milieu aqueux contenant l'agent défloculant anionique et en les soumettant à un broyage en jarre, par exemple à l'aide de bâtonnets de zircone, pendant une durée d'au moins 12 heures. Ceci permet d'obtenir par effet de surface lors du broyage que le chlore présent dans les particules de $ZrO_2$ agisse non seulement sur ces particules de zircone, mais aussi sur les particules de matière céramique pour faciliter leur défloculation.

Dans ce cas, le milieu aqueux présente les caractéristiques voulues pour constituer le milieu aqueux de la suspension, c'est-à-dire le pH et l'agent défloculant anionique.

Dans le cas où le mélange comprend non seulement deux poudres de matière céramique et de zircone, mais aussi des fibres monocristallines de carbure de silicium, on prépare la suspension en mélangeant tout d'abord les poudres de matière céramique et de zircone dans un milieu aqueux par broyage réalisé comme précédemment, puis on disperse les fibres monocristallines de carbure de silicium dans le milieu aqueux de la suspension. De préférence, la suspension est ensuite traitée par ultrasons, puis mélangée en jarre en utilisant par exemple des billes d'alumine. Dans ces conditions, le temps total de mélange est généralement de 20 à 40 heures.

Selon une variante de réalisation de l'invention, on ajoute au matériau composite des particules conductrices, par exemple de carbure ou de nitrure réfractaire comme TiC, TiN, ZrC, TaC de façon à augmenter la conductivité électrique de la pièce obtenue.

Cette phase conductrice est dispersée dans la suspension homogène de départ. Dans le cas où la suspension homogène de départ ne comprend qu'une matière céramique et une poudre de zircone, on mélange ces particules conductrices avec les poudres de matière céramique et de zircone dans le milieu aqueux contenant l'agent défloculant à un pH d'au moins 8 et on les soumet à un broyage, par exemple en jarre.

Dans le cas où l'on prépare un matériau composite comportant une matrice de matière céramique renforcée par des particules de zircone et des fibres monocristallines de carbure de silicium, on introduit cette phase conductrice avant d'incorporer les fibres monocristallines de carbure de silicium. Dans ce cas, on mélange tout d'abord la poudre de matière céramique, la poudre de zircone et la poudre conductrice dans un milieu aqueux par broyage et on disperse ensuite les fibres monocristallines de carbure de silicium dans le milieu aqueux de la suspension.

Cette adjonction de particules conductrices permet d'augmenter suffisamment la conductivité du matériau composite pour que l'on puisse réaliser ensuite l'usinage des pièces frittées obtenues par électro-érosion.

Généralement, la teneur en particules conductrices du mélange sec de poudre de zircone, de matière céramique, éventuellement de de fibres de carbure de silicium et de poudre conductrice, est de 5 à 30% en poids, par exemple 10% en poids.

Après l'opération de préparation de la suspenion, celle-ci est coulée dans un moule poreux qui absorbe l'eau, par exemple un moule en plâtre dur ou en résine organique poreuse par exemple en résine époxyde. On peut aussi utiliser des moules poreux en céramique frittée, par exemple en nitrure de silicium poreux. On peut opérer, soit à la pression atmosphérique, soit sous pression. Dans le cas où l'on opère à la pression atmosphérique, le temps nécessaire pour obtenir une pièce crue, c'est-à-dire pour que le moule poreux ait absorbé toute l'eau de la suspension dépend de l'épaisseur de la pièce et il est généralement de quelques heures. En revanche, dans le cas d'un coulage sous pression, réalisé par exemple dans un moule en nitrure de silicium poreux, on injecte la suspension sous une pression pouvant aller jusqu'à 10MPa et la pièce crue est obtenue dans ce cas beaucoup plus rapidement puisqu'il suffit de quelques minutes seulement.

Les pièces crues obtenues par ces deux techniques de coulage présentent une parfaite dispersion et une parfaite homogénéisation des différentes matières, c'est-à-dire des poudres de matière céramique et de zircone et éventuellement des fibres monocristallines de carbure de silicium. Leur densité à l'état cru est particulièrement élevée puisqu'elle dépasse dans tous les cas 60% de la densité théorique et peut même atteindre 66%, alors que dans le cas de pièces crues obtenues non pas par coulage en barbotine mais par des procédés de mise en forme par compression du mélange séché, la densité à l'état cru ne dépasse pas en général 50% de la densité théorique.

Les pièces crues après démoulage sont soumises à un séchage qui est de préférence réalisé dans une enceinte à hygrométrie contrôlée, effectué à une température allant jusqu'à environ 100°C. Pour réaliser ce séchage, on dispose tout d'abord les pièces sous atmosphère de vapeur d'eau saturante puis on abaisse progressivement la teneur en vapeur d'eau après que la pièce ait été portée lentement à la température de séchage, par exemple 100°C.

La réalisation du séchage en hygrométrie contrôlée permet d'éviter qu'il ne se développe des contraites et des fissures dans la pièce lors du séchage.

Après ce séchage, on réalise le frittage. Lorsque la pièce crue ne comprend pas ou comprend moins de 10% en poids de fibres monocristallines de carbure de silicium, on peut réaliser un frittage naturel dans l'air ou sous atmosphère de gaz neutre tel que l'azote, à une température choisie en fonction de la matière céramique utilisée, pendant une durée telle que l'on obtient une pièce ayant une densité voisine de la densité théorique soit une densité représentant plus de 95% de la densité théorique, voire plus de 99% de la densité théorique lorsque la pièce crue ne comprend pas de fibres.

Lorsque la matière céramique est l'alumine, on peut réaliser un à frittage une température de 1500 à 1650°C, par exemple à 1600°C pendant 3 heures.

On peut aussi réaliser le frittage des pièces ne comprenant pas ou comprenant moins de 10% en poids de fibres, par frittage sous pression, par exemple par frittage sous charge ou par compression isostatique, à chaud sous des pressions allant de 0,1 à 200MPa. La compression isostatique à chaud peut être utilisée sur des pièces crues après les avoir encapsulées dans une enveloppe métallique ou vitreuse. On peut aussi soumettre à un compression isostatique à chaud des pièces préfrittées dans les conditions décrites précédemment, sans les encapsuler.

Lorsque la pièce crue comprend plus de 10% en poids de fibres monocristallines de carbure de silicium, on effectue le frittage sous vide et sous charge, par exemple par compression uniaxiale ou compression isostatique à chaud après encapsulation de la pièce crue dans une enveloppe métallique ou vitreuse, et l'on peut obtenir également un matériau composite ayant une densité voisine de 99% de la densité théorique de la matière céramique.

Dans certains cas, on peut aussi réaliser le frittage en deux étapes, par exemple effectuer un préfrittage sous charge uniaxiale conduisant à l'obtention d'une densité d'environ 95% de la densité théorique, puis réaliser un frittage sous une pression isostatique de 150MPa à 200 MPa en opérant en atmosphère de gaz neutre tel que l'argon, et sans encapsuler la pièce préfrittée.

Dans tous les cas, la température de frittage est choisie en fonction de la matière céramique utilisée, mais elle dépend également de la poudre de zircone utilisée, notamment de sa teneur en oxyde dopant, car il faut éviter lors du frittage la transformation de la zircone en symétrie cubique puisqu'on souhaite la zircone sous forme quadratique.

Par ailleurs, lorsqu'on utilise des whiskers de SiC la température de frittage doit être telle que l'on ne dégrade pas ces fibres monocristallines de SiC. Généralement, on opère à des températures inférieures ou égales à 1650°C, sous des pressions allant de 0,1 à 200MPa.

D'autres caractéristiques et avantages de l'invention apparaîtront mieux à la lecture des exemples suivants donnés bien entendu à titre illustratif et non limitatif.

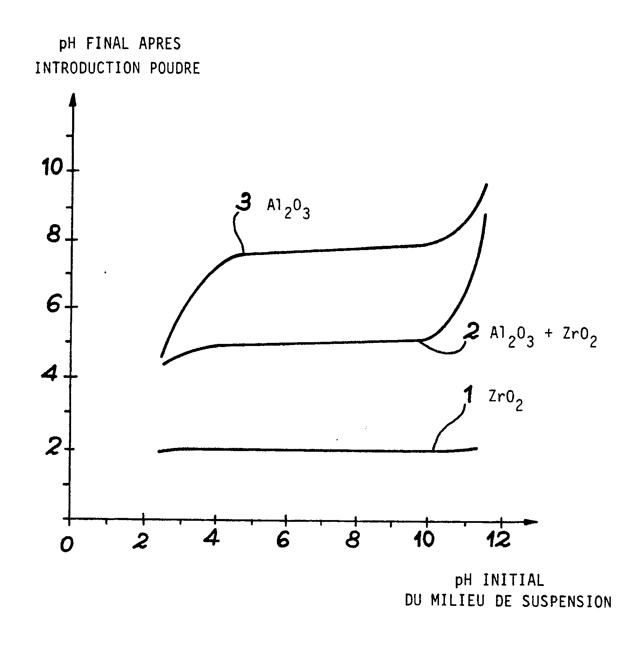

La figure annexée est un diagramme représentant les courbes de charge nulle correspondant à de la zircone contenant 1,02% en poids de Cl (courbe 1), à un mélange de zircone à 1,02% en poids de Cl et d'alumine (courbe 2) et à de l'alumine seule (courbe 3).

Le point de charge nulle d'une poudre en suspension correspond à l'état où les échanges ioniques lors de la dispersion de la poudre dans le milieu de suspension utilisé sont globalement nuls. Ainsi, au point de charge nulle, il n'existe pas de force répulsive permettant de réaliser une bonne défloculation de la poudre.

Pour ces courbes, on a porté en abscisse le pH initial du milieu de suspension utilisé avant introduction de la poudre, et en ordonnée le pH final de la suspension après introduction de la poudre et stabilisation des échanges entre la poudre et le milieu de suspension. Pour le mélange alumine-zircone à 1,02% en poids de Cl, le point de charge nulle se trouve à une valeur d'environ 5 alors que dans le cas de l'alumine seule, le point de charge nulle est sensiblement de 8. Ainsi, l'addition de zircone à 1,02% en poids de Cl permet d'abaisser la valeur du point de charge nulle de l'alumine, et d'obtenir une défloculation à des pH faiblement alcalins qui sont suffisamment éloignés du point de charge nulle du mélange pour que l'on ait des échanges ioniques entre la poudre et le milieu de dispersion.

Dans l'invention, on utilise des suspensions à pH d'au moins 8, ce qui permet d'assurer une bonne défloculation.

Dans les exemples qui suivent, on utilise une poudre d'alumine de très grande pureté ayant une surface spécifique d'environ 7m²/g et une granulométrie moyenne d'environ 0,4$\mu$m.

Exemple 1.
- - - - - -

Préparation d'une pièce composite en alumine renforcée par de la zircone $ZrO_2$.

On introduit 87g de la poudre d'alumine et 13g d'une poudre de zircone non dopée contenant 1,02% en poids de chlore obtenue partir de $ZrCl_4$, ayant une surface spécifique de 22 m²/g, dans 30 cm³ d'une solution aqueuse à 4% en poids de polyacrylate d'ammonium, dont le pH a été ajusté à 9 par addition de soude.

On mélange cette suspension pendant 24 heures en jarre avec des bâtonnets de zircone, puis on coule dans un moule en plâtre. Après démoulage de la pièce crue, on sèche celle-ci sous hygrométrie contrôlée à 100°C et on la fritte naturellement à l'air à une température de 1600°C pendant 3 heures.

On obtient ainsi une pièce frittée présentant une densité de l'ordre de 99% de la densité théorique, dans laquelle 60% environ des particules de zircone introduites possèdent une structure quadratique métastable.

On mesure la résistance à la rupture de la pièce par une méthode de flexion en trois points ; celle-ci atteint 650MPa avec un écart type de 30 MPa. Cette résistance en flexion est plus du double de celle des pièces en alumine pure disponibles commercialement dont la résistance en flexion est en général de 300 MPa. On mesure également la ténacité $K_{IC}$ de la pièce sur éprouvettes indentées soumises à un essai de flexion en trois points afin de déterminer la résistance à la rupture R qui est reliée de façon empirique à la ténacité $K_{IC}$ en MPa$\sqrt{m}$par la relation :

$$K_{IC} = 0,87 \times (Rxp^{1/3})^{3/4} \times 0,316$$

avec p représentant la charge d'indentation. On trouve que celle-ci est de 6 MPa$\sqrt{m}$.

Lorsque l'on prépare dans les mêmes conditions des pièces en alumine renforcée par de la zircone mais en utilisant des poudres de zircone ne contenant pas de chlore résiduel, on obtient des propriétés mécaniques très inférieures comme le montrent les résultats du tableau 1 suivant.

### TABLEAU 1

| | $ZrO_2$ à 1,02% en poids de Cl | $ZrO_2$ sans Cl | $ZrO_2$ sans Cl |
|---|---|---|---|
| densité (% d th) à l'état cru | 64% | 60% | 58% |
| après frittage | 99% | 98% | 97% |
| résistance en flexion (MPa) | 650 ± 30 | 550 ± 80 | 520 ± 100 |
| ténacité MPa.m$^{-1/2}$ | 6 | 4,5 | 4,8 |

Une observation micrographique des pièces obtenues avec ces zircones sans Cl montre la présence de nombreux agglomérats de zircone et d'alumine. Ces agglomérats se comportent alors comme des défauts macroscopiques lors de sollicitations mécaniques des pièces.

Exemple 2.

Préparation d'une pièce en alumine renforcée par de la zircone $ZrO_2$.

Dans cet exemple, on utilise le même mode opératoire et les mêmes poudres que dans l'exemple 1 pour préparer une pièce crue à partir de 87g de poudre d'alumine et 13g de poudre de zircone non dopée. Après démoulage de la pièce crue, on sèche celle-ci comme dans l'exemple 1, puis on réalise le frittage en deux étapes, c'est-à-dire une première étape de préfrittage réalisée comme dans l'exemple 1 à une température de 1600°C pendant 3 heures, et une deuxième étape de frittage par compression isostatique de la pièce préfrittée, sans l'encapsuler, sous une pression de 185MPa, à une température de 1600°C, pendant une heure.

La densité finale de la pièce obtenue atteint la valeur théorique et sa résistance à la flexion dépasse 800MPa avec un écart type de 20MPa.

Exemple 3.

Préparation d'une pièce en alumine renforcée par de la zircone dopée et des fibres monocristallines de carbure de silicium.

On homogénéise en jarre à l'aide de bâtonnets de zircone pendant 20 heures un mélange comprenant 68g de la poudre d'alumine et 15g d'une poudre de zircone analogue à celle de l'exemple 1 qui a été dopée par 3% en mole d'oxyde d'yttrium dans 30 cm³ d'une solution aqueuse à 5% en poids de polacrylate d'ammonium, dont le pH a été ajusté à 9 par addition de soude. On disperse ensuite dans la suspension 17g de fibres monocristallines de carbure de silicium. On soumet la suspension ainsi obtenue à un traitement par ultrasons pendant 5 min. environ, puis on l'homogénéise en jarre à l'aide de billes d'alumine pendant 24 heures. On coule alors la suspension dans un moule en plâtre comme dans l'exemple 1. On démoule la pièce crue et on la sèche sous hygrométrie contrôlée, puis on la fritte par compression uniaxiale sous 30 MPa, à 1600°C pendant 1 heure.

On obtient ainsi une pièce dont la densité est d'environ 99% de la densité théorique.

La résistance à la rupture de la pièce mesurée par la méthode de flexion en trois points est de 950 MPa avec un écart type de 40 MPa. La ténacité mesurée sur éprouvette indentée est de 8 MPa√m.

Exemples 4 à 7.

Dans ces exemples, on prépare des pièces en matériau composite à base d'alumine renforcée par de la zircone et des fibres de SiC en utilisant le même mode opératoire et les mêmes poudres que dans l'exemple 3, sauf en ce qui concerne le mode de préparation de la suspension.

Ainsi, dans l'exemple 4, on introduit directement dans la solution aqueuse à 5% en poids de polyacrylate d'ammonium dont le pH a été ajusté à 9 par addition de soude, l'alumine, la zircone et les fibres monocristallines de SiC et l'on réalise uniquement le mélange en jarre à l'aide de billes d'alumine pendant 24 heures.

Dans l'exemple 5, on prépare la suspension en dispersant directement dans la solution aqueuse (pH = 9) à 5% en poids de polyacrylate d'ammonium, la zircone, l'alumine et les fibres monocristallines de carbure de silicium, et en réalisant tout d'abord un traitement par ultrasons pendant 5 min. puis un mélange final en jarre à l'aide de billes d'alumine pendant 24 heures.

Dans l'exemple 6, on mélange tout d'abord l'alumine et la zircone en jarre à l'aide de bâtonnets de zircone pendant 20 heures dans 30 cm³ de la solution aqueuse (pH = 9) à 5% en poids de polyacrylate d'ammonium, puis on introduit les fibres de carbure de silicium et on soumet la suspension ainsi obtenue uniquement à un traitement par ultrasons pendant 5 min.

Dans l'exemple 7, on disperse l'alumine, la zircone et les fibres de carbure de silicium dans la solution aqueuse (pH = 9) à 5% en poids de polyacrylate d'ammonium, puis on soumet uniquement au traitement par ultrasons pendant 5 min.

Les densités avant et après frittage et la résistance à la rupture des pièces obtenues, mesurée par l'essai de flexion en trois points sont données dans le tableau 2.

## TABLEAU 2

| Ex. | Mélange en jarre preliminaire des poudres $Al_2O_3$ et $ZrO_2$ | Traitement par ultra-sons $Al_2O_3$-$ZrO_2$-SiC | Mélange final en jarre $Al_2O_3$-$ZrO_2$-SiC | Densité avant frittage | Densité après frittage (%d.th) | Résistance en flexion (MPa) | Ecart type MPa |
|---|---|---|---|---|---|---|---|
| 3 | + | + | + | 64% | 99% | 950 | 40 |
| 4 | – | – | + | 62% | 98% | 610 | 50 |
| 5 | – | + | + | 61% | 98% | 880 | 110 |
| 6 | + | + | – | 59% | 95% | 760 | 40 |
| 7 | – | + | – | 66% | 97% | 770 | 100 |

Au vu des résultats de ce tableau, on constate que le mod de préparation de la suspension a un effet très important sur la densité avant frittage et sur les propriétés mécaniques des pièces. Ainsi, les meilleurs résultats sont obtenus lorsqu'on réalise successivement un broyage préalable des poudres d'alumine et de zircone en milieu aqueux, puis une préparation de la suspension à partir des poudres cobroyées suivie d'un traitement par ultrasons et d'un mélange final en jarre.

Exemples 8 à 11.

Dans ces exemples, on utilise le même mode opératoire et les mêmes poudres que dans l'exemple 3, mais on fait varier les teneurs en alumine, en zircone et en fibres monocristallines de carbure de silicium, et on ajoute du TiC dans l'exemple 12, comme il est indiqué dans le tableau 3. On réalise le frittage sous charge à 1600°C comme dans l'exemple 3. On mesure ensuite la densité des pièces obtenues. Les résultats sont donnés dans le tableau 3 où l'on voit que l'on atteint dans tous les cas une densité finale représentant 98-99% de la densité théorique. Par ailleurs, on constate que l'addition de 10% de TiC permet d'obtenir une résistivité électrique suffisamment faible pour permettre un usinage de la pièce par électro-érosion.

EP 0 263 033 B1

## TABLEAU 3

| Ex. | Al2O3 (% en poids) | SiC (% en poids) | ZrO2 (% en poids) | TiC (% en poids) | Densité finale (% de la densité théorique) | Résisti-vité .cm |
|---|---|---|---|---|---|---|
| 3 | 68 | 17 | 15 | | 99 % | |
| 8 | 77 | 6 | 17 | | " | |
| 9 | 72 | 12 | 16 | | " | |
| 10 | 70 | 12 | 18 | | " | |
| 11 | 65 | 17 | 18 | | 98 % | 100 |
| 12 | 59 | 21 | 10 | 10 | 99% | 15 |

## Revendications

1. Procédé de fabrication d'un matériau composite comportant une matrice de matière céramique renforcée par des particules de zircone dopée, caractérisé en ce qu'il comprend les étapes successives suivantes :

1°) préparation d'une suspension homogène d'un mélange d'une poudre de la matière céramique et d'une poudre de zircone dopée contenant au moins 0,8% en poids de Cl dans un milieu aqueux contenant au moins un agent défloculant anionique, consistant à mélanger les poudres de matière céramique et de zircone dans le milieu aqueux contenant l'agent défloculant à un pH d'au moins 8 et à les soumettre à un broyage ;

2°) coulage de la suspension dans un moule poreux,

3°) démoulage de la pièce crue ainsi obtenue,

4°) séchage de la pièce crue, et

5°) frittage de la pièce séchée.

2. Procédé selon la revendication 1 de fabrication d'un matériau composite comportant une matrice de matière céramique renforcée par des particules de zircone dopée et par des fibres monocristallines de carbure de silicium, caractérisé en ce que dans la première étape on prépare une suspension homogène comprenant de plus des fibres monocristallines de carbure de silicium en mélangeant tout d'abord la poudre de matière céramique et la poudre de zircone dans un milieu aqueux à un pH d'au moins 8 par broyage, et en formant ensuite une suspension homogène à partir des poudres ainsi broyées et de fibres monocristallines de carbure de SiC ;

3. Procédé selon la revendication 2, caractérisé en ce que dans la première étape, on disperse les fibres monocristallines de carbure de silicium dans le milieu aqueux de la suspension avec les poudres mélangées et broyées de zircone et de matière céramique, on traite ensuite la suspension par ultrasons et on mélange ensuite en jarre avec des billes d'alumine.

4. Procédé selon l'une quelconque des revendications 1 à 3, caractérisé en ce que la matière céramique est l'alumine.

5. Procédé selon l'une quelconque des revendications 1 à 4, caractérisé en ce que la zircone est dopée par de l'oxyde d'yttrium $Y_2O_3$, la proportion d'oxyde d'yttrium étant au plus de 3% en moles par rapport à la zircone.

6. Procédé selon l'une quelconque des revendications 1 à 5, caractérisé en ce que l'agent défloculant anionique est choisi parmi l'hexamétaphosphate de sodium, les polyacrylates d'ammonium et les polynaphtalène sulfonates de sodium.

7. Procédé selon l'une quelconque des revendications 1 à 6, caractérisé en ce que la teneur en eau de la suspension est de 25 à 35% en poids par rapport à la masse sèche constituée de poudres de matière céramique et de zircone et éventuellement de fibres monocristallines de SiC.

8. Procédé selon l'une quelconque des revendications 1 à 7, caractérisé en ce que la teneur en agent défloculant de la suspension est de 0,5 à 2% en poids par rapport à la masse sèche constituée de poudres de matière céramique et de zircone et éventuellement de fibres monocristallines de carbure de silicium.

9. Procédé selon l'une quelconque des revendications 1 à 8, caractérisé en ce que le mélange sec constitué de poudre de matière céramique, de poudre de zircone et éventuellement de fibres monocristallines de carbure de silicium, contient de 10 à 30% en poids de zircone.

10. Procédé selon l'une quelconque des revendications 2 à 9, caractérisé en ce que le mélange sec constitué de poudre de matière céramique, de poudre de zircone et de fibres monocristallines de carbure de silicium contient de 5 à 30% en poids de fibres monocristallines de carbure de silicium.

11. Procédé selon la revendication 4, caractérisé en ce que l'on réalise le frittage à une température de 1500 à 1650°C sous une pression de 0,1 à 200 MPa.

12. Procédé selon l'une quelconque des revendications 1 à 11, caractérisé en ce que dans la première étape, on ajoute au mélange de poudre de zircone et de poudre de matière céramique des particules d'un matériau conducteur de l'électricité.

13. Procédé selon la revendication 12, caractérisé en ce que le matériau conducteur de l'électricité est un carbure ou un nitrure de métal réfractaire.

14. Procédé selon la revendication 13, caractérisé en ce que le matériau conducteur de l'électricité est du carbure de titane TiC.

15. Procédé selon l'une quelconque des revendications 12 à 14, caractérisé en ce que le mélange sec constitué de poudre de matière céramique, de poudre de zircone, de particules de matériau conducteur et éventuellement de fibres monocristallines de carbure de silicium contient de 5 à 30% en poids de matériau conducteur.

## Claims

1. Process for the manufacture of a composite material comprising a ceramic matrix reinforced with particles of doped zirconia, characterised in that it comprises the following successive stages:
   1) preparation of a homogeneous suspension of a mixture of the ceramic powder and of a doped zirconia powder containing at least 0.8% by weight of Cl in an aqueous medium containing at least one anionic deflocculating agent, consisting in mixing the ceramic and zirconia powders in the aqueous medium containing the deflocculating agent at a pH of at least 8 and subjecting them to a grinding operation;
   2) casting the suspension in a porous mould,
   3) demoulding the raw article thus obtained,
   4) drying the raw article, and
   5) sintering the dried article.

2. Process according to Claim 1 for the manufacture of a composite material comprising a ceramic matrix reinforced with particles of doped zirconia and with monocrystalline silicon carbide fibres, characterised

EP 0 263 033 B1

in that, in the first stage, a homogeneous suspension is prepared, additionally containing monocrystalline silicon carbide fibres, by first mixing the ceramic powder and the zirconia powder in an aqueous medium at a pH of at least 8 by grinding, and by then forming a homogeneous suspension of the powders thus ground and of monocrystalline SiC carbide fibres.

3. Process according to Claim 2, characterised in that, in the first stage, the monocrystalline silicon carbide fibres are dispersed in the aqueous medium of the suspension with the mixed and ground zirconia and ceramic powders, the suspension is then treated using ultrasonics and is then mixed in an earthenware jar with alumina balls.

4. Process according to any of Claims 1 to 3, characterised in that the ceramic is alumina.

5. Process according to any one of Claims 1 to 4, characterised in that the zirconia is doped with yttrium oxide $Y_2O_3$, the proportion of yttrium oxide being not more than 3 mol% relative to the zirconia.

6. Process according to any one of Claims 1 to 5, characterised in that the anionic deflocculating agent is chosen from sodium hexametaphosphate, ammonium polyacrylates and sodium polynaphthalenesulphonates.

7. Process according to any one of Claims 1 to 6, characterised in that the water content of the suspension is from 25 to 35% by weight relative to the dry mass consisting of ceramic and zirconia powders and optionally of monocrystalline SiC fibres.

8. Process according to any one of Claims 1 to 7, characterised in that the deflocculating agent content of the suspension is from 0.5 to 2% by weight relative to the dry mass consisting of ceramic and zirconia powders and optionally of monocrystalline silicon carbide fibres.

9. Process according to any one Claims 1 to 8, characterised in that the dry mixture consisting of ceramic powder, zirconia powder and optionally monocrystalline silicon carbide fibres contains from 10 to 30% by weight of zirconia.

10. Process according to any one of Claims 2 to 9, characterised in that the dry mixture consisting of ceramic powder, zirconia powder and monocrystalline silicon carbide fibres contains from 5 to 30% by weight of monocrystalline silicon carbide fibres.

11. Process according to Claim 4, characterised in that the sintering is carried out at a temperature of 1500 to 1650 $^\circ$ C at a pressure of 0.1 to 200 MPa.

12. Process according to any of Claims 1 to 11, characterised in that, in the first stage, particles of an electrically conductive material are added to the mixture of zirconia powder and ceramic powder.

13. Process according to Claim 12, characterised in that the electrically conductive material is a refractory metal carbide or nitride.

14. Process according to Claim 13, characterised in that the electrically conductive material is titanium carbide TiC.

15. Process according to any one of Claims 12 to 14, characterised in that the dry mixture consisting of ceramic powder, zirconia powder, conductive material particles and optionally monocrystalline silicon carbide fibres contains from 5 to 30% by weight of conductive material.

**Ansprüche**

1. verfahren zum Herstellen eines Verbundmaterials aus einer Matrix aus keramischem Material, die durch dotierte Zirkonpartikel verstärkt ist, dadurch gekennzeichnet, daß es die folgenden, sukzessiven Verfahrensschritte aufweist:
   1$^\circ$) vorbereiten einer homogenen Lösung aus einer Mischung aus einem Pulver aus dem kerami-

12

EP 0 263 033 B1

schen Material und einem dotierten Zirkonpulver, die wenigstens 0,8 Gewichtsprozent cl in einem wässrigen Milieu mit wenigstens einem anionischen Entflockungsmittel enthält, wobei dieser Schritt darin besteht, die Pulver aus keramischem Material und aus Zirkon in dem wässrigen Milieu mit dem Entflockungsmittel bei einem pH-Wert von wenigstens 8 zu mischen und sie einem Zerreibungsprozeß zu unterwerfen;

2°) Gießen der Lösung in eine poröse Form,

3°) Ausformen des so erhaltenen Rohkörpers,

4°) Trocknen des Rohkörpers, und

5°) Sintern des getrockneten Körpers.

2. Verfahren nach Anspruch 1 zum Herstellen eines Verbundmaterials aus einer Matrix aus keramischem Material, die durch dotierte Zirkonpartikel und durch einkristalline Siliziumkarbidfasern verstärkt ist, dadurch gekennzeichnet, daß man im ersten Verfahrensschritt eine homogene Lösung herstellt, die zusätzlich einkristalline Siliziumkarbidfasern enthält, indem man zunächst das Pulver aus keramischem Material und das Zirkonpulver in einem wässrigen Milieu mit einem pH-Wert von wenigstens 8 durch Zerreiben vermischt und indem man dann eine homogene Lösung von den so zerriebenen Pulvern und den einkristallinen Siliziumkarbidfasern herstellt.

3. Verfahren nach Anspruch 2, dadurch gekennzeichnet, daß man beim ersten Verfahrensschritt die einkristallinen Siliziumkarbidfasern in dem wässrigen Milieu der Lösung mit den gemischten und zerriebenen Pulvern aus Zirkon und keramischem Material verteilt, daß man dann die Lösung mit Ultraschall bearbeitet und sie dann in einem Gefäß mit Aluminiumoxydkugeln vermischt.

4. Verfahren nach einem der Ansprüche 1 bis 3, dadurch gekennzeichnet, daß das keramische Material Aluminiumoxyd ist.

5. Verfahren nach einem der Ansprüche 1 bis 4, dadurch gekennzeichnet, daß das Zirkon mit Yttriumoxyd $Y_2O_3$ dotiert ist, wobei der Anteil von Yttriumoxyd höchstens 3 Molprozent bezogen auf das Zirkon beträgt.

6. Verfahren nach einem der Ansprüche 1 bis 5, dadurch gekennzeichnet, daß das anionische Entflockungsmittel ausgewählt wird unter dem Natriumhexametaphosphat, den Ammoniumpolyacrylaten und den Natriumpolynaphtalensulfonaten.

7. Verfahren nach einem der Ansprüche 1 bis 6, dadurch gekennzeichnet, daß der Wassergehalt der Lösung 25 bis 35 Gewichtsprozent bezüglich der trockenen Masse, die aus den Pulvern des keramischen Materials und dem Zirkon und eventuell den einkristallinen Fasern aus SiC besteht, beträgt.

8. Verfahren nach einem der Ansprüche 1 bis 7, dadurch gekennzeichnet, daß der Gehalt an Entflockungsmittel in der Lösung 0,5 bis 2 Gewichtsprozent bezogen aus die trockene Masse, die aus den Pulvern des keramischen Materials und dem Zirkon und eventuell den einkristallinen Fasern aus SiC besteht, beträgt.

9. Verfahren nach einem der Ansprüche 1 bis 8, dadurch gekennzeichnet, daß die trockene Mischung, die aus den Pulvern des keramischen Materials und dem Zirkon und eventuell den einkristallinen Fasern aus SiC besteht, 10 bis 30 Gewichtsprozent Zirkon enthält.

10. Verfahren nach einem der Ansprüche 2 bis 9 dadurch gekennzeichnet, daß die trockene Mischung, die aus den Pulvern des keramischen Materials und dem Zirkon und eventuell den einkristallinen Fasern aus SiC besteht, 5 bis 30 Gewichtsprozent an einkristallinen Fasern aus Siliziumkarbid enthält.

11. Verfahren nach Anspruch 4, dadurch gekennzeichnet, daß man das Sintern bei einer Temperatur von 1500 bis 1650° C unter einem Druck von 0,1 bis 200 MPa durchführt.

12. Verfahren nach einem der Ansprüche 1 bis 11, dadurch gekennzeichnet, daß man im ersten Verfahrensschritt der Mischung aus Zirkonpulver und Pulver aus keramischem Material Teilchen aus einem elektrisch leitfähigen Material hinzufügt.

13

**13.** Verfahren nach Anspruch 12, dadurch gekennzeichnet, daß das elektrisch leitfähige Material ein Karbid oder ein Nitrid eines hochschmelzenden Metalls ist.

**14.** Verfahren nach Anspruch 13, dadurch gekennzeichnet, daß das elektrisch leitfähige Material Titankarbid, TiC, ist.

**15.** Verfahren nach einem der Ansprüche 12 bis 14, dadurch gekennzeichnet, daß die trockene Mischung, die aus den Pulvern des keramischen Materials und dem Zirkon und eventuell den einkristallinen Fasern aus Sic besteht, 5 bis 30 Gewichtsprozent an leitfähigem Material enthält.

pH FINAL APRES
INTRODUCTION POUDRE

3 Al$_2$O$_3$

2 Al$_2$O$_3$ + ZrO$_2$

1 ZrO$_2$

pH INITIAL
DU MILIEU DE SUSPENSION